# EUROPÄISCHE PATENTANMELDUNG

(11) **EP 1 353 171 A2**
(43) Veröffentlichungstag der Anmeldung: **15.10.2003**
(21) Anmeldenummer: 03007632.7
(22) Anmeldetag: 03.04.2003
(51) Int. Cl.: G01N 27/447

(54) **Streifenhalter, Kammer, Kassette und 2D-Gelelektrophoresen-Verfahren**

(30) Priorität: 12.04.2002 CH 20020610; 02.05.2002 US 377318 P
(71) Anmelder: Tecan Trading AG, 8708 Männedorf (CH)
(72) Erfinder: Ingenhoven, Nikolaus, 8708 Männedorf (CH); Höchli, Remo, 8635 Dürnten (CH); Rutishauser, Marcel, 8633 Wolfhausen (CH); Posch, Anton, 85567 Grafing (DE)
(74) Vertreter: OK pat AG

(57) **Zusammenfassung**

Betrifft einen Streifenhalter (1) zum Aufnehmen eines Gelstreifens (3) für die Trennung von Molekülen mittels Gelelektrophorese. Der erfindungsgemässe Streifenhalter (1) ist dadurch gekennzeichnet, dass er eine Grundplatte (4), zumindest einen gegenüber einer Tragfläche (2) tiefergesetzten Anschlag (5) und zumindest eine Dichtfläche (6) umfasst, wobei dieser Anschlag (5) zum Beaufschlagen von Gegenflächen (7) einer Elektrophoresekammer ausgebildet ist und durch das Tiefersetzen gegenüber der Tragfläche (2) die Einbautiefe des einen Gelstreifen (3) tragenden Streifenhalters (1) in dieser Elektrophoresekammer bestimmt wird, und wobei die Dichtfläche (6) einen dichtenden Einbau des einen Gelstreifen (3) tragenden Streifenhalters (1) in diese Elektrophoresekammer gewährleistet. Eine solche Kammer (15) für die isoelektrische Fokussierung von Molekülen in Gelstreifen (3) ist dadurch gekennzeichnet, dass sie einen solchen Streifenhalter (1), einen Rahmen (16) und einen Deckel (20) umfasst. Eine andere Kammer in Form einer Kassette (33) für das Ausführen einer an die isoelektrische Fokussierung anschliessenden Elektrophorese in einer zweiten Dimension, umfasst zwei Platten (34,35) sowie zumindest eine diese Platten beabstandende Dichtung (36) und ist dadurch gekennzeichnet, dass sie einen solchen Streifenhalter (1) umfasst, wobei der Streifenhalter dichtend in eine Aussparung (37) in einer dieser Platten (34) eingesetzt ist. Ebenfalls offenbart ist die erste Dimension eines entsprechenden 2D-Gelelektrophorese-Verfahren.

## Beschreibung

Die Erfindung betrifft einen Streifenhalter mit einer eine Tragfläche - zum Aufnehmen eines Gelstreifens für die Trennung von Molekülen mittels Gelelektrophorese - umfassenden Grundplatte entsprechend dem Oberbegriff des unabhängigen Anspruchs 1; sowie eine Kammer für die isoelektrische Fokussierung (IEF) von Molekülen in Gelstreifen entsprechend dem Oberbegriff des Anspruchs 6; eine Kassette für das Ausführen einer an die IEF anschliessenden Elektrophorese in einer zweiten Dimension, welche zwei Platten und zumindest eine diese Platten beabstandende Dichtung umfasst entsprechend dem Oberbegriff des Anspruchs 12; ein entsprechendes 2D-Gelelektrophorese-Verfahren entsprechend dem Oberbegriff des unabhängigen Anspruchs 17 und ein System zur automatischen Durchführung des Verfahrens entsprechend dem Oberbegriff des Anspruchs 24.

Vor mehr als 25 Jahren publizierte O'Farrell [O'Farrell PH. *J. Biol. Chem.* 1975, 250:4007-4021] ein Verfahren zum hochauflösenden Trennen von Proteinen des Bakteriums *Escherichia coli* mittels einer zwei-dimensionalen Polyacrylamid-Gel-Elektrophorese (2-D PAGE). In der Zwischenzeit wurde dieses Verfahren weiter entwickelt und zählt heute zu einer der am meisten angewandten Techniken zur Analyse und Charakterisierung von komplexen Proteingemischen.

Die Anwendung der isoelektrischen Fokussierung (IEF) als ersten Schritt der 2-D PAGE ermöglicht die Trennung der Proteine an Hand ihrer Ladung und kann in Polyacrylamid-Gelen mit oder ohne immobilisiertem pH-Gradient [vgl. Görg A, Postel W. und Günther S. The current state of two-dimensional electrophoresis with immobilized pH gradients. *Electrophoresis* 1988, 9: 531-546] durchgeführt werden. Im zweiten Schritt werden bevorzugt Polyacrylamid-Gele verwendet, welche als anionisches Detergens Natriumdodecylsulfat (SDS) enthalten und welche besonders geeignet sind, Proteine an Hand ihres Molekulargewichtes aufzutrennen. Damit ist die 2-D PAGE fähig, Proteine an Hand von zwei unabhängigen Parametern, Ladung und Grösse, aufzutrennen.

Aus US 6,113,766 ist ein Gerät zum Rehydratisieren eines Gelstreifens und zum Durchführen einer IEF als ersten Schritt einer 2-D PAGE bekannt. Das Gerät umfasst eine Kammer, die sowohl für die Rehydratisierung eines vorfabrizierten und getrockneten Gelstreifens als auch zum Durchführen der IEF geeignet ist. Der Gelstreifen wird dazu so in der Kammer platziert, dass er - Gelseite nach unten-mit seinen beiden Endbereichen auf je eine Elektrode im Kammerboden zu liegen kommt. Die Kammer ist mit einem Deckel verschliessbar, welcher über Druckteile einen gewissen Druck auf den Gelstreifen ausübt, so dass das Gel auf die Elektroden gepresst wird. Anschliessend an die IEF, d.h. die Auftrennung der Proteine in einer ersten Dimension, wird der Gelstreifen aus der Kammer herausgenommen und für die Durchführung der Auftrennung der Proteine in der zweiten Dimension auf ein SDS-Polyacrylamid-Gel gelegt. Dabei kann der Gelstreifen beschädigt werden, was den Erfolg der gesamten 2-D Gelelektrophorese in Frage stellen kann. Zudem gestaltet sich das Einstellen eines Druckes, der gross genug ist um die elektrische Kontaktierung für die IEF zu gewährleisten, der jedoch so gering ist, dass das Gel nicht beschädigt wird, als äusserst schwierig und aufwändig, weil der Rehydratisierungsgrad des IEF-Gels dessen Volumen zusätzlich beeinflusst.

Eine Lösung des erstgenannten Problems ist aus DE 198 31 210 bekannt, worin ein praktisch gleichzeitiges Giessen der Gele für die erste und zweite Dimension in einer gemeinsamen Vorrichtung offenbart wird. Das IEF-Gel ist vom SDS-PAGE-Gel nur durch ein schmales Element getrennt, welches nach Abschluss der IEF herausgezogen werden kann und so einen Zwischenraum offen lässt, der zum Kontaktieren der beiden Gele mit einem Kontaktgel gefüllt werden kann. Darauf kann die SDS-PAGE durchgeführt werden. Diese Lösung hat den Vorteil, dass der IEF-Gelstreifen zwischen der ersten und zweiten Dimension einer 2-D PAGE überhaupt nicht berührt oder transportiert werden muss. Nachteilig ist aber, dass beide Gele verworfen werden müssen, wenn die IEF nicht erfolgreich war. Zudem ist bekannt, dass die Reproduzierbarkeit von IEF-Resultaten wesentlich verbessert wird, wenn IEF-Gele des gleichen Batchs verwendet werden. Dies würde bedeuten, dass zur gleichen Zeit und unter den gleichen Bedingungen sehr viele Gele für die erste und zweite Dimension gegossen werden müssen, was sehr aufwendig werden kann.

Eine andere Lösung des erstgenannten Problems ist in US 5,993,627 offenbart. In einem vollautomatisierten System für das Durchführen einer 2D-Gelelektrophorese werden sowohl Gele für die erste als auch für die zweite Dimension gegossen. Das Gel umfasst auch Vorrichtungen zum Durchführen der Elektrophorese, der anschliessenden Gelfärbung und Auswertung. Das System basiert auf der Produktion von IEF-Gelen auf einem "backing material" aus Gelbond®, aus dem Übertragen dieses Gels in eine Form zum Giessen des SDS-Gels, in welches gleichzeitig auch eine massive Elektrode eingegossen wird. Das System benötigt mehrere Roboter-Arme bzw. -Greifwerkzeuge zum Fassen und Transportieren der Gele von einem Behälter (IEF-Kammer) zum anderen (SDS-PAGE-Kammer, Staining-Kammer und Scanning-Bett). Das Gelbond®-Material verbessert zwar die Stabilität des IEF-Streifens, das vorgeschlagene Verfahren ist aber kompliziert und aufwändig, die Systeme entsprechend teuer.
Der vorliegenden Erfindung liegt die Aufgabe zu Grunde, eine alternative Vorrichtung zu schaffen, welche aus dem Stand der Technik bekannte Nachteile beseitigt oder zumindest minimiert.

Die Aufgabe wird gemäss einem ersten Aspekt durch die Merkmalskombination des unabhängigen Anspruchs 1, gemäss einem zweiten Aspekt durch die Merkmalskombination des Anspruchs 6, gemäss einem dritten Aspekt durch die Merkmalskombination des Anspruchs 12, gemäss einem vierten Aspekt durch die Merkmalskombination des unabhängigen Anspruchs 17 bzw. gemäss einem fünften Aspekt durch die Merkmalskombination des Anspruchs 24 gelöst. Vorteilhafte Weiterbildungen und zusätzliche Merkmale der Erfindung ergeben sich aus den abhängigen Ansprüchen.

Die Erfindung soll nun an Hand von schematischen und beispielhaften Zeichnungen, welche den Umfang der Erfindung nicht beschränken sollen, näher erläutert werden. Dabei zeigt:
- Fig. 1: einen senkrechten Querschnitt durch eine geschlossene IEF-Kammer mit eingelegtem IEF- Gelstreifen;
- Fig. 2: einen senkrechten Längsschnitt durch eine geschlossene IEF-Kammer mit eingelegtem Gelstreifen, entlang der Schnittlinie A--A in Fig. 1;
- Fig. 3: einen senkrechten Querschnitt durch eine SDS-PAGE-Kassette mit eingesetztem Streifenhalter und IEF-Gel;
- Fig. 4: einen vergrösserten Detailschnitt (vgl. Kreis in Fig. 3) durch die Dichtung der SDS-PAGE-Kassette;
- Fig. 5: eine Draufsicht auf die Frontplatte einer zusammengesetzten SDSPAGE-Kassette vor dem Einsetzen eines Streifenhalters;
- Fig. 6: eine Frontalansicht auf eine zusammengesetzte SDS-PAGE-Kassette mit weggenommener Frontplatte.

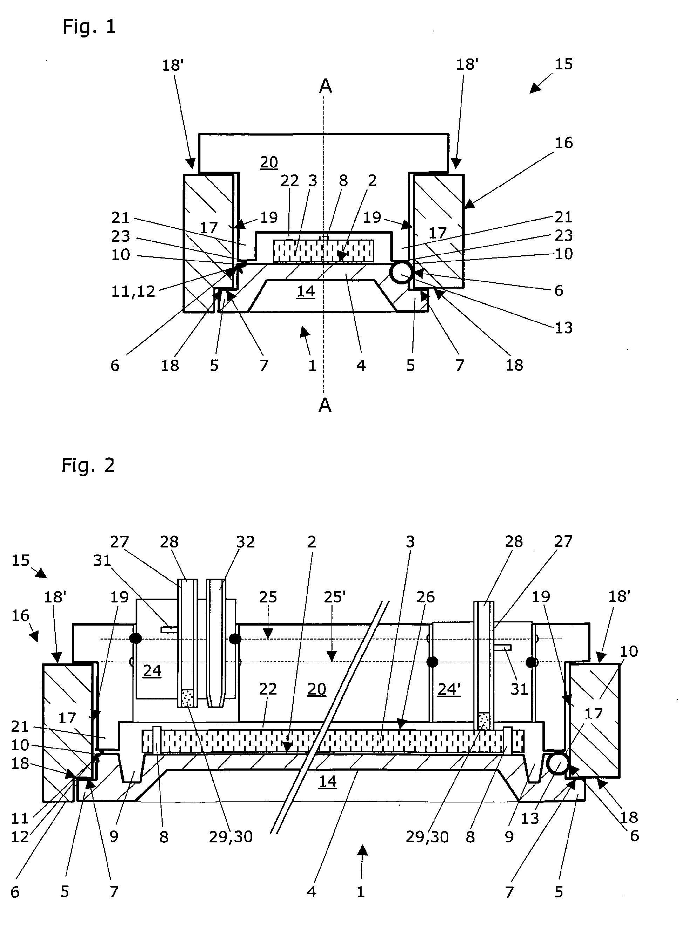

Figur 1 zeigt einen Streifenhalter 1 mit einer eine Tragfläche 2 - zum Aufnehmen eines Gelstreifens 3 für die Trennung von Molekülen mittels Gelelektrophorese-umfassenden Grundplatte 4. Die Grundplatte 4 umfasst zumindest einen gegenüber der Tragfläche 2 tiefergesetzten Anschlag 5 und zumindest eine Dichtfläche 6. Dieser Anschlag ist zum Beaufschlagen von Gegenflächen 7 einer Elektrophoresekammer ausgebildet, wodurch die Einbautiefe des einen Gelstreifen 3 tragenden Streifenhalters 1 in dieser Elektrophoresekammer bestimmt ist und wobei die Dichtfläche 6 einen dichtenden Einbau des einen Gelstreifen tragenden Streifenhalters 1 in diese Elektrophoresekammer gewährleistet.

Der Anschlag 5 ist hier einstückig mit der Grundplatte 4 ausgebildet und bildet eine umlaufend zusammenhängende Anschlagfläche. Alternativ kann vorgesehen sein (nicht gezeigt), dass die Anschlagfläche unterteilt oder durch an der Grundplatte 4 befestigte Bügel mit der gleichen Wirkung ersetzt ist. Während die Grundplatte 4 vorzugsweise aus einem chemisch inerten, elektrisch isolierenden Material mit guten Wärmeleiteigenschaften gefertigt ist, können solche Bügel auch aus einem anderen Material (z.B. aus Metall) hergestellt und z.B. in die Grundplatte eingegossen oder eingeschraubt sein.

Die Grundpatte 4 weist im Bereich der beiden Tragflächenenden vorzugsweise je einen senkrechten Stift 8 auf, welcher zum durchdringenden Positionieren des Gelstreifens 3 ausgebildet ist. Ausserhalb der Tragfläche 2 für den Gelstreifen 3 kann die Grundplatte zudem Vertiefungen 9 zur Aufnahme von Pufferlösung aufweisen.

Die Dichtfläche 6 kann als eine an die äusserste, obere Kante 10 der Grundplatte angeformte Lippendichtung 11 mit einer oder zwei Dichtlippen 12 ausgebildet sein. Diese Lippendichtung 11 wird bevorzugt einstückig mit dem Streifenhalter 1 in einem 2-Komponenten-Spritzgussverfahren hergestellt, wobei die Dichtlippen 12 bevorzugt aus einem elastischeren Kunststoff hergestellt werden als der Streifenhalter 1. Alternativ zu einer angespritzten Lippendichtung kann auch ein O-Ring 13 an der Stelle der Lippendichtung 11 angeordnet werden, dabei kann-je nach dem Material des Streifenhalters - der O-Ring 13 in eine umlaufende Nut eingelegt oder an den Streifenhalter angespritzt bzw. mit dem Streifenhalter zusammen in einem 2-Komponenten-Spritzgussverfahren hergestellt werden. Ausführungsformen, welche eine kostengünstige Massenproduktion von als Verbrauchsmaterial konzipierten Streifenhaltern begünstigen, werden bevorzugt.

Wie schon bemerkt, wird die Grundplatte 4 bevorzugt aus einem chemisch inerten, elektrisch isolierenden Material (die IEF erfolgt routinemässig bei ca. 15 kV) gefertigt, besonders bevorzugt sind dabei spritzgussfähige Kunststoffe. Die Grundplatte 4 soll zusätzlich gute Wärmeleiteigenschaften aufweisen, damit währen dem Rehydratisieren des IEF-Gels und vor allem während der IEF-Gelelektrophorese die Temperatur des Gels besser kontrolliert werden kann. Vorzugsweise weist die Grundplatte zu diesem Zweck eine untere Einsenkung 14 zur Aufnahme einer Kühlrippe (nicht gezeigt) eines Kühlaggregats auf. Weitere bevorzugte Merkmale der Grundplatte 4 umfassen eine gute Kältebeständigkeit, so dass - nach erfolgter Elektrophorese in der ersten Dimension - die IEF-Gele 3 zusammen mit den Streifenhaltern 1 eingefroren, bei ca. -80°C über eine praktisch beliebige Zeit tiefgefroren aufbewahrt und nach Bedarf aufgetaut und für die zweite Dimension der 2-D-Elektrophorese verwendet werden können. Zu diesem Zweck sind die Streifenhalter vorzugsweise aus einem nicht hygroskopisch wirksamen Material hergestellt, so dass die Masshaltigkeit der Streifenhalter 1 durch wiederholtes Einfrieren und Auftauen nicht beeinträchtigt wird.

Des Weiteren zeigt Figur 1 eine Kammer 15 für die isoelektrische Fokussierung (IEF) von Molekülen in Gelstreifen 3. Diese Kammer umfasst einen Streifenhalter 1 und einen Rahmen 16 mit einer umlaufenden Wand 17 sowie einer unteren und oberen Gegenfläche 18,18'. Der Streifenhalter 1 ist so in den Rahmen 16 eingesetzt, dass der zumindest eine Anschlag 5 die untere Gegenfläche 18 beaufschlägt und dass die untere Dichtlippe 12 dichtend an einer inneren Oberfläche 19 der Wand 17 anliegt. Die Kammer umfasst zudem einen Deckel 20 zum Beaufschlagen der oberen Gegenfläche 18' des Rahmens 16.

Der Deckel 20 weist bevorzugt eine Verdickung in Form eines umlaufenden Stegs 21 auf, welche in die Kammer 15 hinein ragt und den Innenraum 22 der Kammer über dem Gelstreifen 3 limitiert. Dabei beaufschlagen die äusserste untere Kante 23 der Verdickung 21 eine Dichtlippe 12 der Lippendichtung 11 dichtend. Alternativ wird ein am Streifenhalter 1 befestigter O-Ring 13 ebenfalls von der unteren Kante 23 der Verdickung 21 beaufschlagt. Der Deckel ist vorzugsweise mit Kontaktstiften oder anderen geeigneten, trennbaren Kontaktmitteln (nicht dargestellt) versehen, so dass der Stromkreis zur Sicherheit des Bedienungspersonals erst mit dem Schliessen der Kammer 15 geschlossen und beim Öffnen der Kammer zwangsweise unterbrochen wird.

Figur 2 zeigt einen senkrechten Längsschnitt durch eine geschlossene IEF-Kammer mit eingelegtem Gelstreifen. Der Schnitt verläuft entlang der in Figur 1 mit A--A bezeichneten Schnittlinie. In den Deckel 20 können zwei Elektrodenhalterungen 24,24' eingesetzt werden. Diese Elektrodenhalterungen sind vorzugsweise in zwei definierte Niveaus 25,25' einsetzbar ausgebildet und umfassen je eine senkrecht zur Oberfläche 26 eines auf der Tragfläche 2 des Streifenhalters 1 liegenden Gelstreifens 3 beschränkt bewegliche Elektrode 27. Diese Elektroden 27 sind als Röhrchen aus elektrisch nicht-leitendem Material (z.B. Glas, Kunststoff, Keramik) mit einer offenen oberen Öffnung 28 ausgebildet und weisen eine die untere Öffnung 29 teilweise verschliessenden Fritte 30 auf. Alternativ kann für die Röhrchen auch leitendes Material verwendet werden. Die Elektroden 27 weisen zudem einem seitlich abzweigenden elektrischen Kontakt 31 auf. Die hohlen Elektroden können mit Pufferlösung zumindest teilweise gefüllt werden und stellen damit eine elektrisch leitende Verbindung zwischen einer Hochspannungssteuerung (nicht dargestellt) und den zwei Polen eines Gelstreifens 3 dar. Die Fritte 30 ist ein für den Puffer und für während der IEF zu den Elektroden 27 migrierende Ionen oder Überschuss-Proteine durchlässiger Filter, welcher dank seiner Durchlässigkeit eine Kristallisation dieser Partikel an den Elektroden verhindert. Speziell bei Vorrichtungen zur automatisierten Durchführung der IEF-Elektrophorese wird eine dank dieser Elektroden 27 verminderte Verschmutzungsrate bzw. einfachere Reinigung geschätzt. Trotz dieser Durchlässigkeit stellt die Fritte 30 für den Puffer im Röhrchen einen so grossen Flusswiderstand dar, dass er nicht wegen seines hydrostatischen Druckes spontan auslaufen kann.

Alternativ zu der beschriebenen offen Version können die Elektroden-Röhrchen an ihrem oberen Ende bis auf eine Zuleitung (Einlauf, nicht dargestellt) verschlossen sein. Ein Auslauf wird dann an der Stelle des seitlich abzweigenden elektrischen Kontakts 31 angeordnet. Ein- und Auslauf werden dann an ein Umwälzsystem zur Temperierung und/oder Filtrierung des Puffers angeschlossen. Über den Ein- oder Auslauf wird auch die elektrische Verbindung zu einer geeigneten Hochspannungssteuerung hergestellt.

Der erste Teil (erste Dimension) eines die erfindungsgemässen Streifenhalter 1 bzw. Kammer 15 verwendenden 2D-Gelelektrophorese-Verfahrens verläuft bevorzugt wie folgt:
- Ein dehydratisierter Gelstreifen 3 wird auf der Tragfläche 2 eines Streifenhalters 1 positioniert.
- Dieser Streifenhalter 1 wird in einen Rahmen 16 mit einer umlaufenden Wand 17 sowie einer unteren und oberen Gegenfläche 18,18' so eingesetzt, dass der zumindest eine Anschlag 5 die untere Gegenfläche 18 beaufschlägt und die Dichtfläche 6 dichtend an einer inneren Oberfläche 19 der Wand 17 anliegt.
- Der Gelstreifen 3 im Innenraum dieser Kammer 15 wird mit Rehydratisierlösung überschichtet. Wahlweise kann zum Vermeiden von Verdunstungsverlusten der Gelstreifen 3 vor dem Auftragen der Probe mit Öl überschichtet werden. Dabei kann eine Probe bereits in dieser Rehydratisierlösung enthalten sein; ist dies nicht der Fall, kann die Probe später (bevorzugt streifenförmig bei offener Kammer bzw. über ein Probenröhrchen 32 bei geschlossener Kammer und eingeschalteter Hochspannung; vgl. unten) auf den Gelstreifen aufgetragen bzw. in den Gelstreifen eingebracht werden.
- Die Kammer wird mit einem Deckel 20 zum Beaufschlagen der oberen Gegenfläche 18' des Rahmens 16 und mit zwei in diesem Deckel 20 einsetzbaren Elektrodenhalterungen 24,24' geschlossen. Dabei werden die Elektrodenhalterungen in ein oberes Niveau 25 eingesetzt, wodurch je eine Elektrode 27, welche jeweils senkrecht zur Oberfläche 26 eines auf der Tragfläche 2 des Streifenhalters 1 liegenden Gelstreifens 3 beschränkt beweglich sind, beabstandet zu dieser Oberfläche 26 stehen.
- Nachdem die Probe in das Gel hinein diffundiert ist, werden die Elektrodenhalterungen auf ein unteres Niveau 25' abgesenkt, wodurch die beiden Elektroden 24,24' diese Oberfläche 26 des Gelstreifens 3 kontaktieren.
- Der Gelstreifen 3 wird über die Elektroden 24,24' unter elektrische Hochspannung gesetzt, bis die isoelektrische Fokussierung (IEF) der Moleküle im Gel stattgefunden hat. Bevorzugt wird dabei die elektrische Hochspannung mit einem Einzelkanalsteuergerät erzeugt, welches die elektrischen Stromparameter regelt und zudem abrufbar und z.B. auf einem Bildschirm anzeigbar speichert.

Das Auftragen der Probe auf das Gel kann - gemäss einer ersten Variante des erfindungsgemässen Verfahrens - dadurch geschehen, dass die Probe bei offener Kammer 15 streifenförmig auf das Gel 3 aufgetragen wird. Dies wird bevorzugt mittels eines Pipettierautomaten, der reproduzierbar eine gewissen Menge Probe abgeben kann) ausgeführt. Dann wird die Kammer 15 mit einem Deckel 20 zum Beaufschlagen der oberen Gegenfläche 18' des Rahmens 16 und mit zwei in diesem Deckel 20 einsetzbaren Elektrodenhalterungen 24,24' geschlossen. Dabei werden die Elektrodenhalterungen 24,24' in ein oberes Niveau 25 eingesetzt, wodurch je eine Elektrode 27, welche jeweils senkrecht zur Oberfläche 26 eines auf der Tragfläche 2 des Streifenhalters 1 liegenden Gelstreifens 3 beschränkt beweglich sind, beabstandet zu dieser Oberfläche (26) stehen, bis die Probe in das Gel hinein diffundiert ist. Die beschriebene, beschränkte Beweglichkeit der Elektroden in Z-Richtung kann auf unterschiedliche Art und Weise bewerkstelligt werden. Die Elektroden 27 können in Z-Richtung (senkrecht zur Oberfläche des im Wesentlichen horizontal liegenden IEF-Gels) frei geführt sein, so dass sie mit ihrem Eigengewicht (bestehend aus Röhrchen, Fritte und Pufferfüllung) das IEF-Gel beaufschlagen. Die Elektroden 27 können mittels eines oder mehrerer Federelemente (nicht gezeigt) so in ihrer Z-Position eingestellt werden, dass sie die IEF-Geleoberfläche mit einem definierten Druck beaufschlagen. Die Z-Beweglichkeit der Elektroden ist damit einerseits durch zumindest ein Federelement und/oder einen Endanschlag (beides nicht gezeigt) beschränkt, so dass die Elektroden bei in oberem Niveau 25 eingesetzter Elektrodenhalterung 24,24' die Geloberfläche 26 nicht berühren können. Beide Varianten der Z-Beweglichkeit ermöglichen ein sanftes aber sicheres Berühren der Geloberfläche, so dass der elektrische Kontakt für die IEF gewährleistet ist, ohne dass das Gel beschädigt wird. Die Elektrodenhalterungen 24,24' werden anschliessend auf ein unteres Niveau 25' abgesenkt, wodurch die beiden Elektroden 27 diese Oberfläche 26-für das Durchführen der IEF - kontaktieren.

Das Auftragen der Probe auf das Gel kann - gemäss einer zweiten Variante des Verfahrens - dadurch geschehen, dass die Kammer 15 mit einem Deckel 20 zum Beaufschlagen der oberen Gegenfläche 18' des Rahmens 16 und mit zwei in diesem Deckel 20 einsetzbaren Elektrodenhalterungen 24,24' geschlossen wird, indem die Elektrodenhalterungen direkt in ein unteres Niveau 25' eingesetzt werden. Dadurch kontaktieren je eine Elektrode 27 sowie zumindest ein Probenröhrchen 32, welche alle jeweils senkrecht zur Oberfläche 26 eines auf der Tragfläche 2 des Streifenhalters 1 liegenden Gelstreifens 3 beschränkt beweglich sind (vgl. Variante 1) diese Oberfläche 26. Darauf wird die Probe unter Anlegen einer elektrischen Spannung über dem Gel aus dem Probenröhrchen 32 in den Gelstreifen hinein gezogen.

Speziell bevorzugt wird die Durchführung dieses Verfahrens in einem entsprechenden automatischen System (nicht gezeigt), dabei kann dieses System eine Arbeitsplattform zum Anordnen einer oder mehrerer IEF-Kammern umfassen und mit einem Kühlgerät zum Kühlen der IEF-Kammern ausgestattet sein. Vorzugsweise umfasst ein solches System zudem einen Roboterarm zum Transferieren von einzeln Teilen der Kammer von und zu diesen IEF-Kammern bzw. SDS-PAGE-Kassetten sowie einen Rechner zum Steuern des Roboters, eine Einzelkanal-Hochspannungssteuerung zur individuellen Ansteuerung der IEF-Kammern und einen Bildschirm. Mit einem solchen System, das vorzugsweise auch einen Pipettierautomaten mit mehreren Kanälen umfasst, kann auch die Rehydratisierlösung automatisch und in einer definierten Menge zugegeben werden, so dass keine überschüssige Rehydratisierlösung aus der Kammer herausgenommen werden muss. Wahlweise kann nach dem Ausführen der ersten Dimension das Verfahren abgebrochen werden.

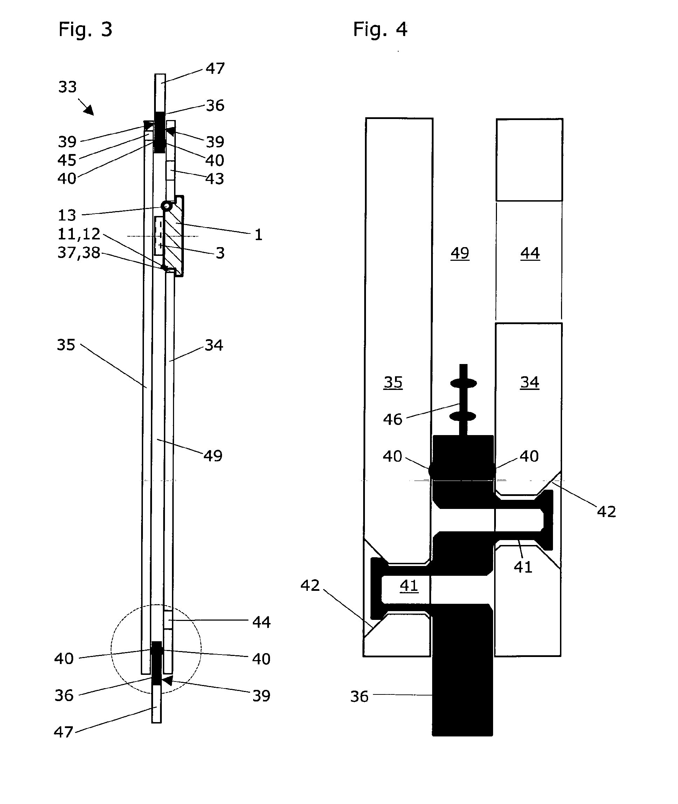

Figur 3 zeigt einen senkrechten Querschnitt durch eine SDS-PAGE-Kassette 33 für das Ausführen einer an die isoelektrische Fokussierung anschliessenden Elektrophorese in einer zweiten Dimension mit einem eingesetztem Streifenhalter 1 und einem IEF-Gelstreifen 3. Diese Kassette 33 umfasst zwei Platten 34,35 und zumindest eine diese Platten beabstandende Dichtung 36. Ein Streifenhalter 1 ist so in eine Aussparung 37 in einer dieser Platten 34 eingesetzt, dass der zumindest eine - vorzugsweise um das Mass der Plattendicke abgesetzte bzw. tiefergesetzte - Anschlag 5 die als Gegenfläche 7 wirkende äussere Oberfläche der Platte 34 beaufschlägt und die Dichtfläche 6 dichtend an der inneren Oberfläche 38 der Aussparung 37 anliegt. Dabei füllt der Gelstreifen 3 den Raum zwischen den Platten 34,35 beinahe aus und die Tragfläche 2 ist im Wesentlichen bündig zur Innenoberfläche der Frontplatte 34.

Die Dichtung 36 ist als eine im Wesentlichen flache, einstückige, ringförmige Dichtung ausgebildet und im Wesentlichen im Bereich des äusseren Randes der Platten 34,35 anordenbar ist und dass die Dichtung 36 auf beiden den Platten anliegenden Seiten 39 je eine ringförmig umlaufende, elastisch deformierbare Dichtkante 40 umfasst. Die Dichtung 36 umfasst ferner im Bereich ausserhalb ihrer Dichtkante 40 liegende Befestigungsnoppen 41, welche zum Einklicken in entsprechende, in die beiden Platten 34,35 eingearbeitete Löcher 42 ausgebildet sind.
Zumindest eine der Platten (hier die Frontplatte 34) umfasst im Bereich des innerhalb von der Dichtkante 40 definierten Raums angeordnete erste Öffnungen 43 zum Einleiten eines Gels, Puffers oder Färbemittels bzw. zweite Öffnungen 44 zum Entlüften oder zum Einleiten eines Gels, Puffers oder Färbemittels. Frontund Rückplatte 34,35 umfassen zudem im Bereich des innerhalb von der Dichtung 36 abgedeckten Raums angeordnete, dritte Öffnungen 45 zum Einleiten eines Trennmediums.

Figur 4 zeigt einen vergrösserten Detailschnitt (entsprechend dem Kreis in Fig. 3) durch die Dichtung einer SDS-PAGE-Kassette 33. Die im Wesentlichen flache Dichtung 36 ist im Wesentlichen im Bereich des äusseren Randes der Platten 34,35 angeordnet und weist auf beiden den Platten 34,35 anliegenden Seiten 39 je eine ringförmig umlaufende, elastisch deformierbare Dichtkante 40 auf. Die im Bereich ausserhalb ihrer Dichtkante 40 liegenden Befestigungsnoppen 41, sind alternierend angeordnet, so dass die Dichtung nach dem Fertigungsprozess zu ihrer Herstellung (z.B. Spritzgiessen) einfach entformt werden kann. Trotzdem sind bevorzugt immer zwei Befestigungsnoppen 41 so nahe beieinander angeordnet, dass sie wie eine direkte Verbindung zwischen den Platten 34,35 wirken. Beim Zusammensetzen der Kassette 33 bewirkt das Einklicken der Befestigungsnoppen 41 in die dafür vorgesehenen Löcher 42 der Platten 34,35, dass die drei Hauptelemente provisorisch zusammengehalten werden und dass die Dichtung 36 beim Einbau der Kassette 33 in eine Haltevorrichtung (nicht gezeigt) richtig positioniert bleibt.

Die Platten 34,35 sind vorzugsweise aus Glas hergestellt. Die Dichtung 36 weist bevorzugt eine Elastizität auf, welche im Wesentlichen derjenigen eines SDS-Gels entspricht, wobei die Zähigkeit der Dichtung jedoch grösser ist, als diejenige des Gels. Damit das SDS-Gel nicht angefasst werden muss, bzw. damit das SDS-Gel schonend gehalten werden kann, umfasst die Dichtung 36 in ein solches Gel einzupolymerisierende Befestigungslaschen 46. Bevorzugt wird eine chemische Bindung zwischen dem Gel und den Befestigungslaschen der Dichtung erzeugt.

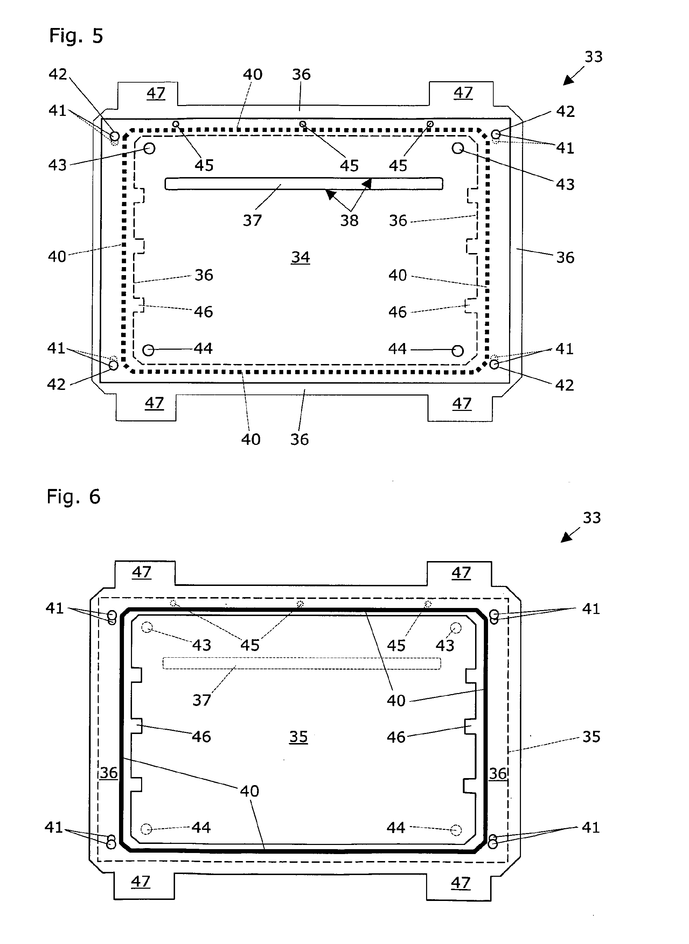

Figur 5 zeigt eine Draufsicht auf die Frontplatte 34 einer zusammengesetzten SDS-PAGE-Kassette 33 vor dem Einsetzen eines Streifenhalters 1. Die Aussparung 37 zum Einsetzen des Streifenhalters 1 liegt in der oberen Hälfte der vorzugsweise in dieser senkrechten Lage für die SDS-PAGE eingesetzten Kassette 33. Die Frontplatte 34 weist bevorzugt im Bereich des innerhalb von der Dichtkante 40 definierten Raums angeordnete erste Öffnungen 43 bzw. zweite Öffnungen 44 zum Entlüften oder zum Einleiten eines Gels, Puffers oder Färbemittels auf. Im Bereich des innerhalb von der Dichtung 36 abgedeckten Raums sind vorzugsweise zudem dritte Öffnungen 45 zum Einleiten eines Trennmediums angeordnet. Dieses Trennmedium kann ein Gas (Luft, Stickstoff, etc.) oder eine Flüssigkeit (z.B. Puffer) sein und dient zum schonenden Ablösen des PAGE-Gels von der Platte 34, damit diese Oberfläche des PAGE-Gels anschliessend einer Färbelösung ausgesetzt werden kann.

Die Dichtung 36 ist im Wesentlichen im Bereich des äusseren Randes der Platten 34,35 anordenbar, umfasst die besagte ringförmig umlaufende, elastisch deformierbare Dichtkante 40 und ragt - zum Schutz der vorzugsweise aus Glas bestehenden Platten 34,35 - bevorzugt rund um die Platten 34,35 herum über deren äussersten Rand hinaus. Die Dichtung 36 ist im Wesentlichen flach, einstückig und ringförmige ausgebildet, sie definiert den Abstand zwischen der Frontplatte 34 und der Rückplatte 35 und weist bevorzugt eine Elastizität auf, welche im Wesentlichen derjenigen eines SDS-Gels entspricht, wobei die Zähigkeit der Dichtung jedoch grösser ist, als diejenige des Gels. Zur innigen Verbindung zwischen Dichtung und SDS-PAGE-Gel umfasst die Dichtung 36 in ein solches Gel einzupolymerisierende Befestigungslaschen 46 umfasst. Die Dichtung dient damit als Rahmen zum Halten des Gels, welche nie direkt angefasst werden muss. Zum Greifen der Dichtung mit einem Werkzeug bzw. einem Roboter weist es an seiner Aussenseite bevorzugt Haltelaschen 47 auf. Im Bereich ausserhalb ihrer Dichtkante 40 umfasst die Dichtung 36 Befestigungsnoppen 41, welche zum Einklicken in entsprechende, in die beiden Platten 34,35 eingearbeitete Löcher 42 ausgebildet sind.

Eine provisorisch (bevorzugt von Hand) zusammengesetzte Kassette 33, besteht aus einer Frontplatte 34, einer Rückplatte 35 und einer dazwischen angeordneten und die beiden Platten 34,35 verbindenden Dichtung 36. Eine solche Kassette kann auch mit Hilfe eines Roboters transportiert werden, indem der Roboter mit geeigneten Mitteln die Haltelaschen ergreift; dafür hält die Dichtung 36 die beiden Platten 34,35 über ihre Noppen 41 mit genügender Sicherheit zusammen.

Figur 6 zeigt eine Frontalansicht auf eine zusammengesetzte SDS-PAGE-Kassette 33 mit weggenommener Frontplatte; die Aussparung 37 und die ersten Öffnungen 43 bzw. zweiten Öffnungen 44 der Frontplatte 34 sind nur gestrichelt gezeichnet. Im Bereich des innerhalb von der Dichtung 36 abgedeckten Raums sind vorzugsweise zudem dritte Öffnungen 45 zum Einleiten eines Trennmediums angeordnet. Dieses Trennmedium kann ein Gas (Luft, Stickstoff, etc.) oder eine Flüssigkeit (z.B. Puffer) sein und dient zum schonenden Ablösen des PAGE-Gels von der Rückplatte 35, damit diese Oberfläche des PAGE-Gels anschliessend einer Färbelösung ausgesetzt werden kann.

Die Arbeitsplattform eines Systems zur automatischen Durchführung des 2-D-Gelelektrophorese-Verfahrens umfasst bevorzugt acht parallel zu einander angeordnete IEF-Kammern 15, so dass das vorzugsweise verwendete Kühlaggregat zur Temperaturkontrolle der IEF-Kammern ebenfalls acht Kühlrippen aufweist. Das Einzelkanalsteuergerät für die elektrische Hochspannung ist demgemäss vorzugsweise zur individuellen Steuerung von acht IEF-Kammern ausgelegt und speichert zudem abrufbar und z.B. auf einem Bildschirm anzeigbar die elektrischen Stromparameter aller acht IEF-Kammern des automatischen Systems.

Die Bezugszeichen bezeichnen jeweils gleiche Merkmale, auch wenn nicht zu jeder Figur alle Merkmale ausdrücklich benannt werden.

## Patentansprüche

1. Streifenhalter (1) mit einer eine Tragfläche (2) - zum Aufnehmen eines Gelstreifens (3) für die Trennung von Molekülen mittels Gelelektrophorese-umfassenden Grundplatte (4), **dadurch gekennzeichnet, dass** die Grundplatte (4) zumindest einen gegenüber der Tragfläche (2) tiefergesetzten Anschlag (5) und zumindest eine Dichtfläche (6) umfasst, wobei dieser Anschlag (5) zum Beaufschlagen von Gegenflächen (7) einer Elektrophoresekammer ausgebildet ist und durch das Tiefersetzen gegenüber der Tragfläche (2) die Einbautiefe des einen Gelstreifen (3) tragenden Streifenhalters (1) in dieser Elektrophoresekammer bestimmt wird, und wobei die Dichtfläche (6) einen dichtenden Einbau des einen Gelstreifen (3) tragenden Streifenhalters (1) in diese Elektrophoresekammer gewährleistet.

2. Streifenhalter nach Anspruch 1, **dadurch gekennzeichnet, dass** der zumindest eine Anschlag (5) einstückig mit der Grundplatte (4) ausgebildet ist und zumindest eine Anschlagfläche bildet.

3. Streifenhalter nach Anspruch 1 oder 2, **dadurch gekennzeichnet, dass** die Grundpatte (4) im Bereich der beiden Enden der Tragfläche (2) je einen senkrechten Stift (8) aufweist, welcher zum durchdringenden Positionieren des Gelstreifens (3) ausgebildet ist und dass die Grundplatte (4) ausserhalb der Tragfläche (2) Vertiefungen (9) zur Aufnahme von Pufferlösung aufweist.

4. Streifenhalter nach Anspruch 1, 2 oder 3, **dadurch gekennzeichnet, dass** die Dichtfläche (6) als eine an die äusserste, obere Kante (10) der Grundplatte (4) angeformte Lippendichtung (11) mit einer oder zwei Dichtlippen (12) ausgebildet ist.

5. Streifenhalter nach einem der vorhergehenden Ansprüche, **dadurch gekennzeichnet, dass** die Grundplatte (4) aus einem chemisch inerten, elektrisch isolierenden Material mit guten Wärmeleiteigenschaften gefertigt ist und eine untere Einsenkung (14) zur Aufnahme einer Kühlrippe eines Kühlaggregats aufweist.

6. Kammer (15) für die isoelektrische Fokussierung von Molekülen in Gelstreifen (3), **dadurch gekennzeichnet, dass** sie einen Streifenhalter (1) nach einem der vorhergehenden Ansprüche und einen Rahmen (16) mit einer umlaufenden Wand (17) sowie einer unteren und oberen Gegenfläche (18,18') umfasst, wobei der Streifenhalter (1) so in den Rahmen (16) eingesetzt ist, dass der zumindest eine Anschlag (5) die untere Gegenfläche (18) beaufschlägt und die untere Dichtlippe (12) dichtend an einer inneren Oberfläche (19) der Wand (17) anliegt.

7. Kammer nach Anspruch 6, **dadurch gekennzeichnet, dass** sie zudem einen Deckel (20) zum Beaufschlagen der oberen Gegenfläche (18') des Rahmens (16) mit zwei in diesem Deckel (20) einsetzbaren Elektrodenhalterungen (24,24') umfasst.

8. Kammer nach Anspruch 7, **dadurch gekennzeichnet, dass** der Deckel (20) eine Verdickung (21) aufweist, welche in die Kammer (15) hinein ragt und den Innenraum (22) der Kammer über dem Gelstreifen (3) limitiert, wobei die äusserste untere Kante (23) der Verdickung (21) eine Dichtlippe (12) der Lippendichtung (11) bzw. einen O-Ring (13) dichtend beaufschlägt.

9. Kammer nach Anspruch 7 oder 8, **dadurch gekennzeichnet, dass** die Elektrodenhalterungen (24,24') in zwei definierte Niveaus (25,25') einsetzbar ausgebildet sind und je eine senkrecht zur Oberfläche (26) eines auf der Tragfläche (2) des Streifenhalters (1) liegenden Gelstreifens (3) beschränkt bewegliche Elektrode (27) umfassen.

10. Kammer nach Anspruch 9, **dadurch gekennzeichnet, dass** die Elektroden (27) als Röhrchen mit einer offenen oberen Öffnung (28), einem seitlich abzweigenden elektrischen Kontakt (31) und einer die untere Öffnung (29) teilweise verschliessenden Fritte (30) ausgebildet sind.

11. Kammer nach einem der Ansprüche 7 bis 10, **dadurch gekennzeichnet, dass** zumindest eine der Elektrodenhalterungen (24,24') zudem ein senkrecht zur Oberfläche (26) eines auf der Tragfläche (2) des Streifenhalters (1) liegenden Gelstreifens (3) beschränkt bewegliches Probenröhrchen (32) umfasst.

12. Kassette (33) für das Ausführen einer an die isoelektrische Fokussierung anschliessenden Elektrophorese in einer zweiten Dimension, welche zwei Platten (34,35) und zumindest eine diese Platten beabstandende Dichtung (36) umfasst, **dadurch gekennzeichnet, dass** sie einen Streifenhalter (1) nach einem der Ansprüche 1 bis 5 umfasst, wobei der Streifenhalter so in eine Aussparung (37) in einer dieser Platten (34) eingesetzt ist, dass der zumindest eine - vorzugsweise um das Mass der Plattendicke tiefergesetzte - Anschlag (5) die als Gegenfläche (7) wirkende äussere Oberfläche der Platte (34) beaufschlägt und die Dichtfläche (6) dichtend an der inneren Oberfläche (38) der Aussparung (37) anliegt.

13. Kassette nach Anspruch 12, **dadurch gekennzeichnet, dass** die Dichtung (36) als eine im Wesentlichen flache, einstückige, ringförmige Dichtung ausgebildet und im Wesentlichen im Bereich des äusseren Randes der Platten (34,35) anordenbar ist und dass die Dichtung (36) auf beiden den Platten (34,35) anliegenden Seiten (39) je eine ringförmig umlaufende, elastisch deformierbare Dichtkante (40) umfasst.

14. Kassette nach Anspruch 13, **dadurch gekennzeichnet, dass** die Dichtung (36) im Bereich ausserhalb ihrer Dichtkante (40) Befestigungsnoppen (41) umfasst, welche zum Einklicken in entsprechende, in die beiden Platten (34,35) eingearbeitete Löcher (42) ausgebildet sind.

15. Kassette nach Anspruch 13 oder 14, **dadurch gekennzeichnet, dass** zumindest eine der Platten (34,35) im Bereich des innerhalb von der Dichtkante (40) definierten Raums angeordnete erste Öffnungen (43) bzw. zweite Öffnungen (44) zum Entlüften oder zum Einleiten eines Gels, Puffers oder Färbemittels umfasst und dass zumindest eine der Platten (34,35) im Bereich des innerhalb von der Dichtung (36) abgedeckten Raums angeordnete, dritte Öffnungen (45) zum Einleiten eines Trennmediums umfasst.

16. Kassette nach einem oder mehreren der Ansprüche 12 bis 15, **dadurch gekennzeichnet, dass** die Platten (34,35) aus Glas sind, dass die Dichtung (36) eine Elastizität aufweist, welche im Wesentlichen derjenigen eines SDS-Gels entspricht, wobei die Zähigkeit der Dichtung jedoch grösser ist, als diejenige des Gels und dass die Dichtung (36) in ein solches Gel einzupolymerisierende Befestigungslaschen (46) umfasst.

17. 1-D- bzw. 2-D-Gelelektrophorese-Verfahren, **dadurch gekennzeichnet, dass** ein dehydratisierter Gelstreifen (3) auf der Tragfläche (2) eines Streifenhalters (1) positioniert wird, wobei der Streifenhalter (1) eine die Tragfläche (2) - zum Aufnehmen eines Gelstreifens (3) für die Trennung von Molekülen mittels Gelelektrophorese - umfassende Grundplatte (4) umfasst, welche zumindest einen gegenüber der Tragfläche (2) tiefergesetzten Anschlag (5) und zumindest eine Dichtfläche (6) umfasst, wobei dieser Anschlag (5) zum Beaufschlagen von Gegenflächen (7) einer Elektrophoresekammer ausgebildet ist und durch das Tiefersetzen gegenüber der Tragfläche (2) die Einbautiefe des einen Gelstreifen (3) tragenden Streifenhalters (1) in dieser Elektrophoresekammer bestimmt wird, und wobei die Dichtfläche (6) einen dichtenden Einbau des einen Gelstreifen (3) tragenden Streifenhalters (1) in diese Elektrophoresekammer gewährleistet.

18. Verfahren nach Anspruch 17, **dadurch gekennzeichnet, dass**, ein Streifenhalter gemäss einem der Ansprüche 2 bis 5 verwendet wird.

19. Verfahren nach Anspruch 17 oder 18, **dadurch gekennzeichnet, dass** dieser Streifenhalter (1) in einen Rahmen (16) mit einer umlaufenden Wand (17) sowie einer unteren und oberen Gegenfläche (18,18') so eingesetzt wird, dass der zumindest eine Anschlag (5) die untere Gegenfläche (18) beaufschlägt und die Dichtfläche (6) dichtend an einer inneren Oberfläche (19) der Wand (17) anliegt.

20. Verfahren nach Anspruch 19, **dadurch gekennzeichnet, dass** der Gelstreifen (3) im Innenraum (22) einer solchen Kammer (15) mit Rehydratisierlösung überschichtet und eine Probe auf den Gelstreifen (3) aufgetragen wird.

21. Verfahren nach Anspruch 20, **dadurch gekennzeichnet, dass** die Probe bei offener Kammer (15) streifenförmig auf das Gel (3) aufgetragen wird und dass dann die Kammer (15) mit einem Deckel (20) zum Beaufschlagen der oberen Gegenfläche (18') des Rahmens (16) und mit zwei in diesem Deckel (20) einsetzbaren Elektrodenhalterungen (24,24') geschlossen wird, indem die Elektrodenhalterungen (24,24') in ein oberes Niveau (25) eingesetzt werden, wodurch je eine Elektrode (27), welche jeweils senkrecht zur Oberfläche (26) eines auf der Tragfläche (2) des Streifenhalters (1) liegenden Gelstreifens (3) beschränkt beweglich sind, beabstandet zu dieser Oberfläche (26) stehen, bis die Probe in das Gel hinein diffundiert ist, worauf die Elektrodenhalterungen (24,24') auf ein unteres Niveau (25') abgesenkt werden, wodurch die beiden Elektroden (27) diese Oberfläche (26) kontaktieren.

22. Verfahren nach Anspruch 20, **dadurch gekennzeichnet, dass** die Kammer (15) mit einem Deckel (20) zum Beaufschlagen der oberen Gegenfläche (18') des Rahmens (16) und mit zwei in diesem Deckel (20) einsetzbaren Elektrodenhalterungen (24,24') geschlossen wird, indem die Elektrodenhalterungen in ein unteres Niveau (25') eingesetzt werden, wodurch je eine Elektrode (27) sowie ein Probenröhrchen (32), welche jeweils senkrecht zur Oberfläche (26) eines auf der Tragfläche (2) des Streifenhalters (1) liegenden Gelstreifens (3) beschränkt beweglich sind, diese Oberfläche (26) kontaktieren, worauf die Probe unter Anlegen einer elektrischen Spannung über dem Gel aus dem Probenröhrchen (32) in den Gelstreifen hinein gezogen wird.

23. Verfahren nach Anspruch 21 oder 22, **dadurch gekennzeichnet, dass** der Gelstreifen (3) über die Elektroden (27) unter elektrische Hochspannung gesetzt wird, bis die isoelektrische Fokussierung der Moleküle im Gel stattgefunden hat, wobei die elektrische Hochspannung mit einem Einzelkanalsteuergerät erzeugt wird, welches die elektrischen Stromparameter regelt und zudem abrufbar und z.B. auf einem Bildschirm anzeigbar speichert.

24. System zur automatischen Durchführung des Verfahrens gemäss einem der Ansprüche 17 bis 23, **dadurch gekennzeichnet, dass** es eine Arbeitsplattform zum Anordnen einer oder mehrerer IEF-Kammern (15) gemäss einem der Ansprüche 6 bis 11 und einer oder mehrerer SDS-PAGE-Kassetten (33) gemäss einem der Ansprüche 12 bis 16 umfasst.

25. System nach Anspruch 24, **dadurch gekennzeichnet, dass** es einen Roboterarm zum Transferieren von einzeln Teilen der Kammern (15) bzw. Kassetten (33) von und zu diesen IEF-Kammern (15) bzw. diesen SDS-PAGE-Kassetten (33) sowie einen Rechner zum Steuern des Roboters, eine Einzelkanal-Hochspannungssteuerung zur individuellen Ansteuerung der IEF-Kammern (15) und einen Bildschirm umfasst.
